# EUROPÄISCHE PATENTSCHRIFT

(11) **EP 3 066 360 B1**
(45) Veröffentlichungstag und Bekanntmachung des Hinweises auf die Patenterteilung: **12.01.2022**
(21) Anmeldenummer: 14795611.4
(22) Anmeldetag: 04.11.2014
(51) Int. Cl.: F16H 49/00

(54) **ELEKTRISCHER ANTRIEB UND INDUSTRIEROBOTER MIT WENIGSTENS EINEM SOLCHEN ELEKTRISCHEN ANTRIEB**
ELECTRICAL DRIVE AND INDUSTRIAL ROBOT COMPRISING AT LEAST ONE SUCH ELECTRICAL DRIVE
ENTRAÎNEMENT ÉLECTRIQUE ET ROBOT INDUSTRIEL ÉQUIPÉ D'AU MOINS UN TEL ENTRAÎNEMENT ÉLECTRIQUE

(30) Priorität: 05.11.2013 DE 102013222454
(43) Veröffentlichungstag der Anmeldung: 14.09.2016
(73) Patentinhaber: KUKA Deutschland GmbH, 86165 Augsburg (DE)
(72) Erfinder: REEKERS, Andre, 86163 Augsburg (DE)
(74) Vertreter: Böss, Dieter Alexander
(86) Internationale Anmeldenummer: PCT/EP2014/073747
(87) Internationale Veröffentlichungsnummer: WO 2015/067623

(56) Entgegenhaltungen:
- DE-A1-102010 016 952
- US-A1- 2002 135 241
- US-A1- 2011 116 962
- None

## Beschreibung

Die Erfindung betrifft einen elektrischer Antrieb, aufweisend einen elektrischen Motor, der ein Motorgehäuse, eine mittels wenigstens zweier Wälzlager drehbar gelagerte Antriebswelle, einen im Motorgehäuse festgelegten Stator und einen mit der Antriebswelle verbundenen, im Motorgehäuse drehbaren Rotor umfasst, und ein Spannungswellengetriebe, das ein Getriebegehäuse, einen starren Außenring mit einer Innenverzahnung, eine flexible Abtriebsbüchse mit einer Au-ßenverzahnung, und einen im Getriebegehäuse drehbaren, an der flexiblen Abtriebsbüchse abwälzenden Wellengenerator umfasst, wobei die Außenverzahnung der flexiblen Abtriebsbüchse in Abhängigkeit einer Drehbewegung des Wellengenerators mit der Innenverzahnung des starren Außenring in kämmenden Eingriff ist. Die Erfindung betrifft außerdem einen Industrieroboter mit wenigstens einem solchen elektrischen Antrieb.

Aus der DE 38 01 387 A1 ist eine Harmonische Drehzahlwandlervorrichtung bekannt, mit einem kreisförmigen Zahnring, der eine zylindrische äußere Oberfläche besitzt, auf der eine Verzahnung ausgebildet ist, einer flexiblen Zahnwelle, die eine zylindrische innere Oberfläche besitzt, auf der eine Verzahnung ausgebildet ist, wobei die Zahnzahl der Verzahnung der flexiblen Zahnwelle größer ist als die der Verzahnung des kreisförmigen Zahnringes, wobei die flexible Zahnwelle außerhalb des kreisrunden Zahnringes angeordnet ist, so dass die Verzahnung des kreisrunden Zahnringes mit der Verzahnung der flexiblen Zahnwelle kämmen kann und einem Wellengenerator, der eine innere Oberfläche besitzt, die einen elliptischen Querschnitt festlegt, wobei die Verzahnung der flexiblen Zahnwelle durch die innere Oberfläche des Wellengenerators so in eine Ellipse verformt wird, dass die Verzahnung der flexiblen Zahnwelle teilweise mit der Verzahnung des kreisrunden Zahnringes kämmt, um dadurch die flexible Zahnwelle mit einer vorher festgelegten Reduktionsrate zu drehen, wenn der Wellengenerator gedreht wird.

Aus der DE 10 2010 016 952 A1 ist ein Harmonic-Drive-Untersetzungsgetriebe für einen Roboter bekannt, mit einem Gehäuse, aufweisend einen in dem Gehäuse ausgebildeten Rahmen; eine an dem Rahmen fixierte Circular Spline mit einem mit Innenverzahnung vorgesehenen Randbereich; eine in die Circular Spline eingefügte zylinderförmige Flexspline mit einem äußeren Randbereich, welcher mit einer im Eingriff mit der Innenverzahnung stehenden Außenverzahnung vorgesehen ist, wobei die Flexspline mit einer Abtriebswelle verbunden ist; und einen in der Flexspline eingepassten elliptischen Wellengenerator, welcher mit einer Antriebswelle verbunden ist.

Die US 2002/0135241 A1 und die US 2011/0116962 A1 beschreiben, jeweils für sich alleine betrachtet, ein Spannungswellengetriebe mit einem Getriebegehäuse, einer flexiblen Antriebsbüchse, einem starren Außenring und einer Antriebswelle, die von einem Motor angetrieben ist. Der Stator des Motors sitzt dabei in einem Gehäuseabschnitt, der gleichzeitig auch einen Gehäuseabschnitt des Getriebegehäuses bildet. Insoweit sind dort das Motorgehäuse und das Getriebegehäuse einteilig als ein gemeinsames Gehäuse ausgebildet.

Aufgabe der Erfindung ist es, einen gattungsgemäßen elektrischen Antrieb, insbesondere einen Industrieroboter mit einem solchen elektrischen Antrieb zu schaffen, der kompakt und insbesondere auch leicht ist.

Die Aufgabe der Erfindung wird gelöst durch einen elektrischen Antrieb, aufweisend:
einen elektrischen Motor, der ein Motorgehäuse, eine mittels wenigstens zweier Wälzlager drehbar gelagerte Antriebswelle,
einen im Motorgehäuse festgelegten Stator und einen mit der Antriebswelle verbundenen, im Motorgehäuse drehbaren Rotor umfasst, und
ein Spannungswellengetriebe, das ein Getriebegehäuse, einen starren Außenring (Circular Spline) mit einer Innenverzahnung, eine flexible Abtriebsbüchse (Flexspline) mit einer Außenverzahnung, und einen im Getriebegehäuse drehbaren, an der flexiblen Abtriebsbüchse abwälzenden Wellengenerator umfasst, wobei die Außenverzahnung der flexiblen Abtriebsbüchse in Abhängigkeit einer Drehbewegung des Wellengenerators mit der Innenverzahnung des starren Außenrings in kämmenden Eingriff ist,
wobei der Rotor auf der Antriebswelle befestigt ist und ein erstes der wenigstens zwei Wälzlager innerhalb der flexiblen Abtriebsbüchse angeordnet und ausgebildet ist, die Antriebswelle in dem Getriebegehäuse drehbar zu lagern, gekennzeichnet durch
   - eine Flanschplatte, an der auf der einen Seite der Flanschplatte das Getriebegehäuse angeflanscht ist, indem die Flanschplatte mit dem starren Außenring des Spannungswellengetriebes verbunden ist, wobei
   - an einer gegenüberliegenden Seite der Flanschplatte das Motorgehäuse angeflanscht ist, und
   - der starre Außenring in dem Getriebegehäuse des Spannungswellengetriebes gelagert ist.

Das Motorgehäuse kann eine erste Gehäusehälfte einer Motor-Getriebe-Einheit sein. Das Getriebegehäuse kann eine zweite Gehäusehälfte der Motor-Getriebe-Einheit bilden. Dabei muss das gesamte Gehäuse der Motor-Getriebe-Einheit nicht notwendiger Weise von nur zwei Gehäusehälften, nämlich der Motorgehäusehälfte und der Getriebegehäusehälfte gebildet werden, sondern es können in bestimmten Ausführungen auch weitere Gehäusehälften, d.h. Gehäuseteile vorgesehen sein.

Die Antriebswelle wird durch diejenige Welle in dem elektrischen Antrieb gebildet, die durch den Rotor des elektrischen Motors angetrieben wird. Auf dieser Antriebswelle ist der Rotor befestigt. Die Antriebswelle muss dabei nicht notwendiger Weise einteilig ausgeführt sein, vielmehr kann die Antriebswelle zwei- oder mehrteilig ausgebildet sein. Beispielsweise kann die Antriebswelle von einer Motorwelle und einer separaten, mit der Motorwelle verbundenen, insbesondere starr verbundenen Getriebewelle gebildet werden.

Die gattungsgemäß wenigstens zwei Wälzlager bilden Lagerkomponenten einer Wälzlageranordnung, die ausgebildet ist, die Antriebswelle in dem elektrischen Antrieb, d.h. in dem Gehäuse der Motor-Getriebe-Einheit, insbesondere innerhalb der Getriebegehäusehälfte zu lagern. Bei der Wälzlageranordnung kann es sich beispielsweise um eine dem Fachmann als solches bekannte Fest-Los-Lagerung, eine angestellte Lagerung, insbesondere in X-Anordnung oder O-Anordnung, oder eine fliegende Lagerung handeln. In einer Ausführung kann die Wälzlageranordnung ausschließlich in der Getriebegehäusehälfte ausgebildet sein, wobei ein Abschnitt der Antriebswelle, insbesondere die Motorwelle aus der Getriebegehäusehälfte lagerungsfrei in die Motorgehäusehälfte auskragt. Dabei kann Wälzlageranordnung innerhalb der Getriebegehäusehälfte nach außerhalb des Getriebegehäuses abgedichtet sein. Mit anderen Worten laufen die wenigstens zwei Wälzlager innerhalb der abgedichteten Getriebegehäusehälfte in Öl oder Fett, wobei der Rotor und Stator innerhalb der Motorgehäusehälfte trocken laufen, d.h. aufgrund der Abdichtung kein Öl oder Fett aus der Getriebegehäusehälfte in die Motorgehäusehälfte gelangt. Eine Abdichtung kann mit dem Fachmann an sich bekannten Dichtungen, wie beispielsweise Radialwellendichtringen erfolgen, welche einen zwischen der Getriebegehäusehälfte und der Antriebswelle vorhandenen Ringspalt abdichten. Eine solche Abdichtung kann auch dadurch erfolgen, dass in dem Ringspalt zwischen der Getriebegehäusehälfte und der Antriebswelle eines der Wälzlager angeordnet ist und zumindest dieses Wälzlager gedichtet ausgeführt ist, d.h. zwischen einem Innenring des Wälzlagers und eine Außenring des Wälzlagers ein dem Wälzlager eigener Radialwellendichtring angeordnet ist.

Indem ein erstes der wenigstens zwei Wälzlager innerhalb der flexiblen Abtriebsbüchse angeordnet und ausgebildet ist, die Antriebswelle in dem Getriebegehäuse drehbar zu lagern, wird der im Stand der Technik stets ungenutzt bleibende freie Hohlraum genutzt, so dass ein kompakter, d.h. in seinem Abmessungen verkleinerter Antrieb geschaffen wird. Aufgrund einer solchen Verkleinerung des Antriebs kann auch Gewicht eingespart werden, wodurch sich ein insgesamt leichterer Antrieb ergibt.

Dass ein erstes der wenigstens zwei Wälzlager innerhalb der flexiblen Abtriebsbüchse angeordnet ist, kann bedeuten, dass dieses Wälzlager in einem ansonsten freien Ringspaltraum angeordnet ist, dass von der rohrförmigen inneren Mantelwand der flexiblen Antriebsbüchse und der äußeren Mantelwand der Antriebswelle begrenzt wird. Dabei kann dieses Wälzlager in axialer Richtung insbesondere vollständig zwischen einer sich radial erstreckenden Flanschfläche, insbesondere einer Bodenfläche der flexiblen Abtriebsbüchse und einem flexiblem Umfangsrand der flexiblen Abtriebsbüchse angeordnet sein.

Das erste, innerhalb der flexiblen Abtriebsbüchse angeordnete Wälzlager kann einen mit der Antriebswelle drehfest verbundenen Innenring und einen mit der flexiblen Abtriebsbüchse verbundenen Außenring aufweisen. Durch eine solche Anordnung wird die Antriebswelle bezüglich der flexiblen Abtriebsbüchse drehbar gelagert. Der Innenring kann unmittelbar auf einer Mantelfläche der Antriebswelle aufsitzen. Alternativ kann der Innenring auf einem Sitzbauteil aufsitzen, der mit der Antriebswelle verbunden, insbesondere starr verbunden ist. Der Außenring kann unmittelbar mit der flexiblen Abtriebsbüchse verbunden sein. Alternativ kann der Außenring in einem separaten Außenringsitz sitzen, wobei der den Au-ßenring tragende Außenringsitz mit der flexiblen Abtriebsbüchse verbunden, insbesondere starr verbunden ist. Der Au-ßenringsitz kann in einer abgewandelten Ausführung statt an der flexiblen Abtriebsbüchse an einem separaten Abtriebsglied befestigt sein. Das separate Abtriebsglied kann mit der flexiblen Abtriebsbüchse starr verbunden sein.

In einer alternativen oder ergänzenden Ausführung kann der separate Außenringsitz von einem Topfeinsatz gebildet werden, der innenrandseitig eine Sitzfläche für den Außenring aufweist und bodenseitig mit der flexiblen Abtriebsbüchse, insbesondere einer Bodenfläche der flexiblen Abtriebsbüchse und/oder mit dem Abtriebsglied verbunden ist. Der Topfeinsatz kann in einer solchen Ausführung eine im Querschnitt kreisringförmige Mantelwand aufweisen, die sich in den freien Ringspaltraum erstreckt, der von der rohrförmigen inneren Mantelwand der flexiblen Antriebsbüchse und der äußeren Mantelwand der Antriebswelle begrenzt wird. Dabei kann sich diese kreisringförmige Mantelwand des Topfeinsatzes in axialer Richtung insbesondere mit seiner innenrandseitigen Sitzfläche vollständig zwischen einer sich radial erstreckenden Flanschfläche, insbesondere der Bodenfläche der flexiblen Abtriebsbüchse und einem flexiblem Umfangsrand der flexiblen Abtriebsbüchse erstrecken.

Generell kann die Antriebswelle mittels der wenigstens zwei Wälzlager in einer Fest-Loslageranordnung oder einer angestellten Lagerung drehbar gelagerte sein, insbesondere ausschließlich im Getriebegehäuse drehbar gelagerte sein.

Im Falle einer Fest-Loslageranordnung kann das innerhalb der flexiblen Abtriebsbüchse angeordnete erste Wälzlager das Loslager bilden. In einer ersten Ausführung kann dazu eine axiale Verschiebbarkeit des Innenrings des Loslagers auf der Antriebswelle vorgesehen sein. Alternativ kann in einer zweiten Ausführung eine axiale Verschiebbarkeit des Außenrings des Loslagers in dem Topfeinsatz, an der flexiblen Abtriebsbüchse oder an dem separaten Abtriebsglied vorgesehen sein. Eine derartige Verschiebbarkeit kann beispielsweise durch Auswahl einer dem Fachmann an sich bekannten Passung, insbesondere Spiel- oder Übergangspassung von Innenring zu Antriebswelle bzw. Außenring zu Topfeinsatz, flexibler Abtriebsbüchse oder separatem Abtriebsglied konstruktiv ausgeführt werden.

Im Falle einer angestellten Lagerung kann das erste Wälzlager und das zweite Wälzlager jeweils ein Rillenkugellager oder jeweils ein Schrägkugellager sein. Eine solche angestellten Lagerung kann entweder in einer X-Anordnung oder O-Anordnung konfiguriert sein.

Generell und insbesondere in Kombination mit einer der beschriebenen Ausführungen für das erste Wälzlager kann ein zweites der wenigstens zwei Wälzlager auf einer dem ersten, innerhalb der flexiblen Abtriebsbüchse angeordneten Wälzlager gegenüberliegenden Seite des Wellengenerators auf der axialen Erstreckung der Antriebswelle angeordnet sein. Anders ausgedrückt kann das zweite Wälzlager an einer solchen axialen Position auf der Längserstreckung der Antriebswelle angeordnet sein, dass der Wellengenerator zwischen dem ersten Wälzlager und dem zweiten Wälzlager angeordnet ist. Dabei kann der Wellengenerator unmittelbar auf der Antriebswelle aufsitzen, insbesondere kann der Wellengenerator einen Innenring aufweisen, der starr auf der Antriebswelle festgelegt ist.

Zumindest das beschriebene erste Wälzlager und zumindest das beschriebene zweite Wälzlager, insbesondere alle zur drehbaren Lagerung der Antriebswelle vorgesehenen Wälzlager können innerhalb des Getriebegehäuses angeordnet sein. Insbesondere können diese Wälzlager jeweils einen Außenring aufweisen, wobei all diese Außenringe in dem Getriebegehäuse festgelegt sind. Dadurch kann die Antriebswelle, insbesondere die Getriebewelle ausschließlich in dem Getriebegehäuse vollständig gelagert sein. Ein Abschnitt der Antriebswelle, insbesondere die Motorwelle kann dadurch aus der Getriebegehäusehälfte lagerungsfrei in die Motorgehäusehälfte auskragen, so das ohne weitere Wälzlager zu benötigen, der Rotor des Motors bezüglich des Stators ausreichend genau drehbar in der Motorgehäusehälfte gelagert ist. So kann die Motorgehäusehälfte, insbesondere zusammen mit dem Stator und evtl. weiteren Komponenten, wie beispielsweise einem Sensor, insbesondere einem Motorwellen-Winkelstellungs-Mess-Sensor, wie beispielsweise ein Resolver oder Inkrementalgeber, auf einfache Weise an die Getriebegehäusehälfte angeflanscht bzw. auf die Antriebswelle aufgesteckt werden.

Das Getriebegehäuse, insbesondere zusammen mit dem zumindest einem ersten Wälzlager und dem zumindest einen zweiten Wälzlager, insbesondere zusammen mit allen zur drehbaren Lagerung der Antriebswelle vorgesehenen Wälzlager kann mittels mindestens einem Radialwellendichtring öldicht und/oder fettdicht abgedichtet sein. Insbesondere n dieser Ausführung kann die Wälzlageranordnung ausschließlich in der Getriebegehäusehälfte ausgebildet sein, wobei ein Abschnitt der Antriebswelle, insbesondere die Motorwelle aus der Getriebegehäusehälfte lagerungsfrei in die Motorgehäusehälfte auskragt. Dabei kann Wälzlageranordnung innerhalb der Getriebegehäusehälfte nach außerhalb des Getriebegehäuses abgedichtet sein. Mit anderen Worten laufen die wenigstens zwei Wälzlager innerhalb der abgedichteten Getriebegehäusehälfte in Öl oder Fett, wobei der Rotor und Stator innerhalb der Motorgehäusehälfte trocken laufen, d.h. aufgrund der Abdichtung kein Öl oder Fett aus der Getriebegehäusehälfte in die Motorgehäusehälfte gelangt. Eine Abdichtung kann mit dem Fachmann an sich bekannten Dichtungen, wie beispielsweise Radialwellendichtringen erfolgen, welche einen zwischen der Getriebegehäusehälfte und der Antriebswelle vorhandenen Ringspalt abdichten. Eine solche Abdichtung kann auch dadurch erfolgen, dass in dem Ringspalt zwischen der Getriebegehäusehälfte und der Antriebswelle eines der Wälzlager angeordnet ist und zumindest dieses Wälzlager gedichtet ausgeführt ist, d.h. zwischen einem Innenring des Wälzlagers und eine Außenring des Wälzlagers ein dem Wälzlager eigener Radialwellendichtring angeordnet ist.

In der soeben beschriebenen Ausführung kann, wie auch in anderen abgewandelten Ausführungen auf einer dem ersten Wälzlager und/oder dem Wellengenerator gegenüberliegenden Seite des zweiten Wälzlagers ein Wellenabschnitt der Antriebswelle aus dem Getriebegehäuse herausragen. So kann die Motorgehäusehälfte, insbesondere zusammen mit dem Stator und evtl. weiteren Komponenten, wie beispielsweise einem Sensor, insbesondere einem Motorwellen-Winkelstellungs-Mess-Sensor, wie beispielsweise ein Resolver oder Inkrementalgeber, auf einfache Weise an die Getriebegehäusehälfte angeflanscht bzw. auf die Antriebswelle aufgesteckt werden.

In diesen und ähnlichen Ausführungen kann der Rotor auf dem aus dem Getriebegehäuse herausragenden Wellenabschnitt der Antriebswelle befestigt sein.

In einer ersten Variante kann die Antriebswelle einteilig ausgebildet sein und einen sich innerhalb des Getriebegehäuses erstreckenden ersten Wellenabschnitt aufweisen, der die wenigstens zwei Wälzlager trägt und einen sich innerhalb des Motorgehäuses erstreckenden zweiten, insbesondere ungelagerten Wellenabschnitt aufweisen, auf dem der Rotor befestigt ist. Der erste Wellenabschnitt kann insoweit die bereits beschriebene Getriebewelle bilden. Der zweite Wellenabschnitt kann insoweit die bereits beschriebene Motorwelle bilden. Die zur Getriebewelle und Motorwelle beschriebenen Ausführungen können insoweit in gleicher Weise für den ersten Wellenabschnitt und den zweiten Wellenabschnitt gelten, wobei in diesem Zusammenhang die Getriebewelle und die Motorwelle zusammen einteilig ausgebildet sind und damit die Antriebswelle bilden.

In einer zweiten Variante kann die Antriebswelle zweiteilig oder mehrteilig ausgebildet sein und eine Getriebewelle umfassen, welche die wenigstens zwei Wälzlager trägt und eine Motorwelle, insbesondere eine ungelagerte Motorwelle umfassen, auf welcher der Rotor befestigt ist, wobei die Motorwelle an die Getriebewelle angeflanscht und/oder mittels einer Welle-Nabe-Verbindung angekoppelt ist. Eine derartige zweiteilige Ausbildung der Antriebswelle ist insbesondere dann geeignet, wenn das Spannungswellengetriebe zusammen mit dem Getriebegehäuse und der Getriebewelle eine Baueinheit bildet und der elektrische Motor zusammen mit dem Motorgehäuse und der Motorwelle eine separate Baueinheit bildet, und die beiden Baueinheiten durch einfaches Aneinanderflanschen den elektrischen Antrieb bilden. Dies kann die Fertigung der beiden separaten Baueinheiten und auch die Montage des elektrischen Antriebs vereinfachen. Erfindungsgemäß ist eine Flanschplatte vorgesehen, an der auf der einen Seite der Flanschplatte das Getriebegehäuse angeflanscht ist und an einer gegenüberliegenden Seite der Flanschplatte das Motorgehäuse angeflanscht ist.

Das Motorgehäuse ist insoweit an dem Getriebegehäuse angeflanscht. Das Motorgehäuse ist mittelbar mit dem Getriebegehäuse verbunden, insbesondere verschraubt, und zwar über die oben näher bezeichnete Flanschplatte, welche das Motorgehäuse mit dem Getriebegehäuse verbindet.

Die Erfindung betrifft außerdem einen Industrieroboter aufweisend eine Robotersteuerung, die ausgebildet und/oder eingerichtet ist, ein Roboterprogramm auszuführen, sowie aufweisend einen Manipulatorarm mit mehreren Gliedern, die über Gelenke verbunden sind, die gemäß des Roboterprogramms automatisiert oder in einem Handfahrbetrieb automatisch verstellbar sind, und aufweisend wenigstens einen von der Robotersteuerung ansteuerbaren elektrischen Antrieb, wie gemäß einer oder mehrere der offenbarten Ausführungen von erfindungsgemäßen elektrischen Antrieben beschrieben, wobei dieser elektrische Antrieb ausgebildet ist oder diese elektrischen Antriebe ausgebildet sind, eines oder mehrerer der Gelenke des Industrieroboters zu verstellen.

Das wenigstens eine Gelenk des Manipulatorarms des Industrieroboters kann ein erstes Glied der mehreren Gliedern mit einem zweiten der mehreren Glieder drehbar verbinden und die flexible Antriebsbüchse des elektrischen Antriebs kann dabei mit dem ersten, insbesondere abtriebsseitigen Glied starr verbunden sein und der Wellengenerator des elektrischen Antriebs kann dabei mit dem zweiten, insbesondere antriebsseitigen Glied verbunden sein.

Industrieroboter sind Arbeitsmaschinen, die zur automatischen Handhabung und/oder Bearbeitung von Objekten mit Werkzeugen ausgerüstet werden können und mittels ihrer Gelenke in mehreren Bewegungsachsen beispielsweise hinsichtlich Orientierung, Position und Arbeitsablauf programmierbar sind.

Der Industrieroboter weist den Manipulatorarm und eine programmierbare Steuerung (Steuervorrichtung) auf, die während des Betriebs die Bewegungsabläufe des Industrieroboters steuert bzw. regelt, dadurch, dass ein oder mehrere automatisch oder manuell verstellbare Gelenke (Roboterachsen) durch insbesondere elektrische Antriebe bewegt werden, in dem die Steuerung die Antriebe steuert bzw. regelt.

Manipulatorarme können unter anderem ein Gestell und ein relativ zum Gestell mittels eines Gelenks drehbar gelagertes Karussell umfassen, an dem eine Schwinge mittels eines anderen Gelenks schwenkbar gelagert ist. An der Schwinge kann dabei ihrerseits ein Armausleger mittels eines weiteren Gelenks schwenkbar gelagert sein. Der Armausleger trägt dabei eine Roboterhand, wobei insoweit der Armausleger und/oder die Roboterhand mehrere weitere Gelenke aufweisen können.

Der mehrere über Gelenke verbundene Glieder aufweisende Manipulatorarm kann als ein Knickarmroboter mit mehreren seriell nacheinander angeordneten Gliedern und Gelenken konfiguriert sein, insbesondere kann der Manipulatorarm als ein Sechsachs-Knickarmroboter ausgebildet sein.

Der Antrieb kann insbesondere ein elektrischer Antrieb sein, der einen Rotor mit einer elektrischen Rotorwicklung und einer Antriebswelle aufweist und einen Stator mit einer elektrischen Statorwicklung, die insbesondere in einem Antriebsgehäuse untergebracht sein kann. Der Rotor kann insbesondere dadurch mit einem Eingangsglied des Getriebes verbunden sein, indem die Antriebswelle, insbesondere eine Hohlwelle des Antriebs mit einer hohlen Getriebewelle des Getriebes verbunden, oder sogar einteilig mit diesem als eine gemeinsame Hohlwelle ausgebildet ist.

Generell kann ein einzelnes Gelenk des Manipulatorarms einen erfindungsgemäßen elektrischen Motor und ein erfindungsgemäßes Spannungswellengetriebe aufweisen oder zwei oder mehrere, insbesondere auch alle Gelenke des Manipulatorarms können erfindungsgemäße Antriebe, d.h. elektrische Motoren und Spannungswellengetriebe aufweisen. Ein erfindungsgemäßes Gelenk ist repräsentativ für jegliches Gelenk des Manipulatorarms im Folgenden beschrieben.

Zwei Ausführungsbeispiele der Erfindung sind exemplarisch in den beigefügten schematischen Zeichnungen dargestellt. Konkrete Merkmale dieser Ausführungsbeispiele können unabgängig davon, in welchem konkreten Zusammenhang sie erwähnt sind, gegebenenfalls auch einzeln oder in Kombination betrachtet, allgemeine Merkmale der Erfindung darstellen.

Es zeigen:
- Fig. 1: eine perspektivische Ansicht eines Industrieroboters mit einem Manipulatorarm, der erfindungsgemäße elektrische Antriebe mit jeweils einem elektrischen Motor und einem Spannungswellengetriebe aufweist,
- Fig. 2: eine Schnittansicht im Bereich eines beispielhaften Gelenks des Industrieroboters gemäß Fig. 1 mit einer ersten Ausführungsform eines erfindungsgemäßen elektrischen Antriebs in einer beispielhaften Einbausituation mit einer einteiligen Antriebswelle, und
- Fig. 3: eine Schnittansicht im Bereich eines beispielhaften Gelenks des Industrieroboters gemäß Fig. 1 mit einer zweiten Ausführungsform des erfindungsgemäßen elektrischen Antriebs in einer beispielhaften Einbausituation mit einer zweiteiligen Antriebswelle.

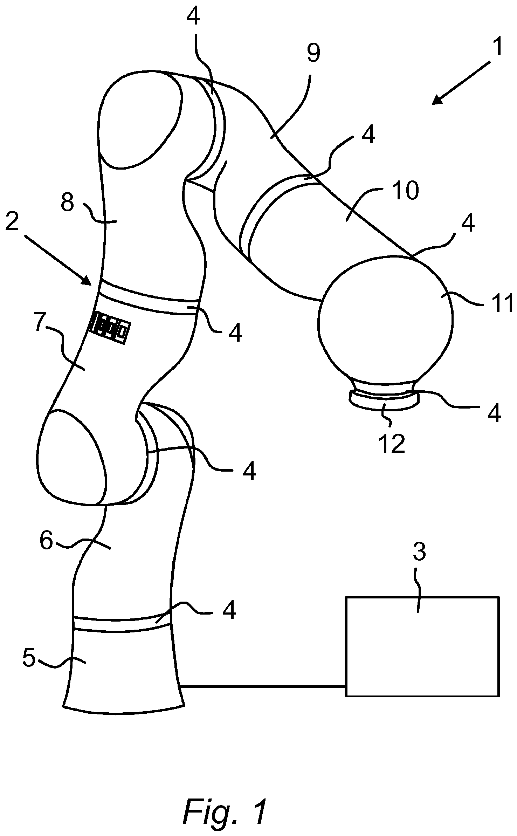

Die Fig. 1 zeigt einen Industrieroboter 1 in einer beispielhaften Ausführung als ein so genannter Leichtbauroboter, der einen Manipulatorarm 2 und eine Robotersteuerung 3 aufweist. Der Manipulatorarm 2 umfasst im Falle des vorliegenden Ausführungsbeispiels mehrere, nacheinander angeordnete und mittels Gelenke 4 drehbar miteinander verbundene Glieder 5 bis 12.

Die Robotersteuerung 3 des Industrieroboters 1 ist ausgebildet bzw. eingerichtet, ein Roboterprogramm auszuführen, durch welches die Gelenke 4 des Manipulatorarms 2 gemäß des Roboterprogramms automatisiert oder in einem Handfahrbetrieb automatisch verstellt bzw. drehbewegt werden können. Dazu ist die Robotersteuerung 3 mit ansteuerbaren elektrischen Antrieben 13 verbunden, die ausgebildet sind, die Gelenke 4 des Industrieroboters 1 zu verstellen.

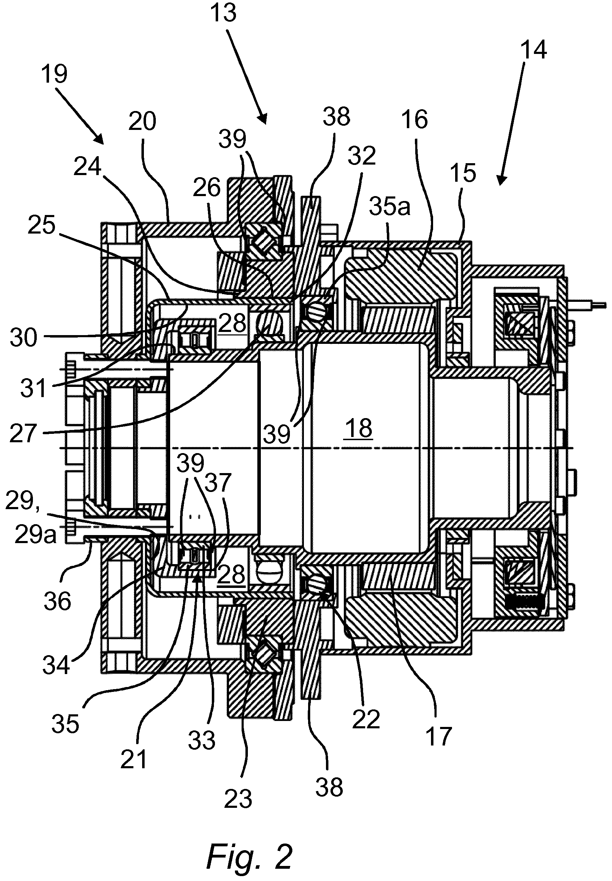

Ein repräsentatives Gelenk 4 des Manipulatorarms 2, welches einen erfindungsgemäßen elektrischen Antrieb 13 einer beispielhaften konkreten ersten Ausführungsform aufweist, ist in Fig. 2 näher dargestellt.

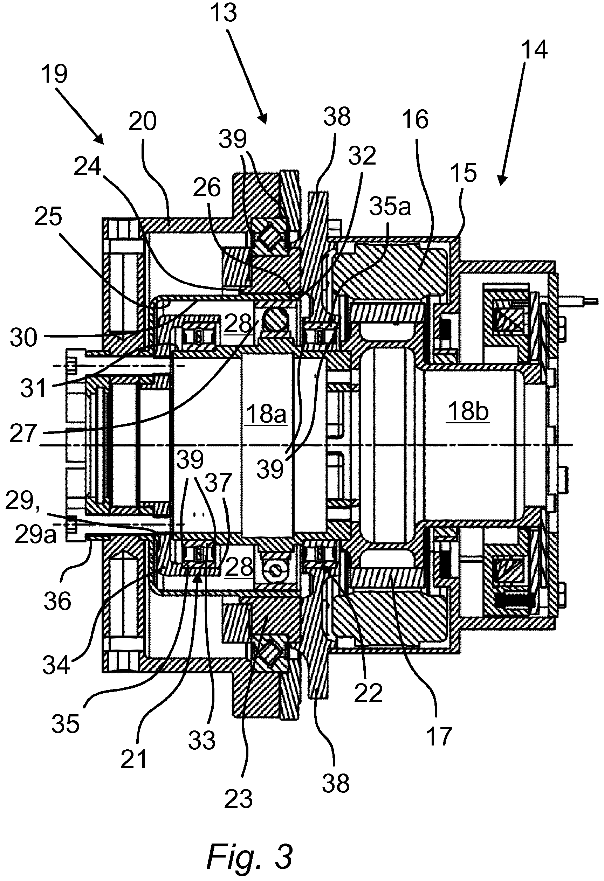

Der elektrische Antrieb 13 gemäß Fig. 2 und Fig. 3 weist einen elektrischen Motor 14 auf, der ein Motorgehäuse 15 umfasst, in dem ein Stator 16 festgelegt ist und der einen Rotor 17 aufweist, welcher auf einer Antriebswelle 18 des elektrischen Antriebs 13 befestigt ist. Die Antriebswelle 18 ist mittels eines ersten Wälzlagers 21 und eines zweiten Wälzlagers 22 drehbar gelagert.

Der elektrische Antrieb 13 umfasst außerdem ein Spannungswellengetriebe 19, das ein Getriebegehäuse 20 aufweist, in dem ein starrer Außenring 23 gelagert ist, der auch als Circular Spline bezeichnet wird, und der mit einer Innenverzahnung 24 versehen ist. Das Spannungswellengetriebe 19 umfasst außerdem eine flexible Abtriebsbüchse 25, die auch als Flexspline bezeichnet wird, und die mit einer Außenverzahnung 26 versehen ist.

In dem Getriebegehäuse 20 ist darüber hinaus ein an der flexiblen Abtriebsbüchse 25 abwälzender Wellengenerator 27 drehbar gelagert. Die Außenverzahnung 26 der flexiblen Abtriebsbüchse 25 ist in Abhängigkeit einer Drehbewegung des Wellengenerators 27 mit der Innenverzahnung 24 des starren Außenrings 23 in kämmenden Eingriff.

Erfindungsgemäß ist das erste Wälzlager 21 innerhalb der flexiblen Abtriebsbüchse 25 angeordnet und ausgebildet, die Antriebswelle 18 in dem Getriebegehäuse 20 drehbar zu lagern.

Indem das erste Wälzlager 21 innerhalb der flexiblen Abtriebsbüchse 25 angeordnet ist, liegt dieses erste Wälzlager 21 in einem ansonsten freien Ringspaltraum 28, der von einer rohrförmigen inneren Mantelwand 30 der flexiblen Antriebsbüchse 25 und einer äußeren Mantelwand 31 der Antriebswelle 18 begrenzt wird. Dabei ist dieses erste Wälzlager 21 in axialer Richtung vollständig zwischen einer sich radial erstreckenden Flanschfläche 29, insbesondere einer Bodenfläche 29a der flexiblen Abtriebsbüchse 25 und einem flexiblem Umfangsrand 32 der flexiblen Abtriebsbüchse 25 angeordnet.

Das innerhalb der flexiblen Abtriebsbüchse 25 angeordnete erste Wälzlager 21 weist einen mit der Antriebswelle 18 drehfest verbundenen, insbesondere einen auf der Antriebswelle 18 unmittelbar aufsitzenden Innenring 33 und einen im dargestellten Ausführungsbeispiel mit einem separaten Außenringsitz 34 verbundenen Außenring 35 auf. Der separate Au-ßenringsitz 34 ist an der flexiblen Abtriebsbüchse 25 und an einem Abtriebsglied 36 befestigt.

Der separate Außenringsitz 34 wird, wie in Fig. 2 und Fig. 3 dargestellt, von einem Topfeinsatz gebildet, der innenrandseitig eine Sitzfläche 37 für den Außenring 35 aufweist und bodenseitig mit der flexiblen Abtriebsbüchse 25, insbesondere mit der Bodenfläche 29a der flexiblen Abtriebsbüchse 25 verbunden ist.

Die Antriebswelle 18 kann mittels des ersten Wälzlagers 21 und des zweiten Wälzlagers 22 beispielsweise in einer angestellten Lagerung in X-Anordnung drehbar, insbesondere ausschließlich im Getriebegehäuse 20 drehbar gelagert sein, wobei das erste Wälzlager 21 innerhalb der flexiblen Abtriebsbüchse 25 angeordnet ist.

Das zweite Wälzlager 22 ist auf einer dem ersten Wälzlager 21, das innerhalb der flexiblen Abtriebsbüchse 25 angeordnet ist, gegenüberliegenden Seite des Wellengenerators 27 auf der axialen Erstreckung der Antriebswelle 18 angeordnet.

Sowohl das erste Wälzlager 21, als auch das zweite Wälzlager 22 sind innerhalb des Getriebegehäuses 20 angeordnet, insbesondere ist zumindest der Außenring 35 des ersten Wälzlagers 21 in dem Getriebegehäuse festgelegt.

Das Motorgehäuse 15 ist an dem Getriebegehäuse 20 angeflanscht. Dazu ist, wie in den beispielhaften Ausführungen der Fig. 2 und Fig. 3 dargestellt, eine Flanschplatte 38 vorgesehen, an der auf der einen Seite der Flanschplatte 38 das Getriebegehäuse 20 angeflanscht ist und an einer gegenüberliegenden Seite der Flanschplatte 38 das Motorgehäuse 15 angeflanscht ist. Das zweite Wälzlager 22 kann dabei einen Außenring 35a aufweisen, der in Abwandlung zu einer Festlegung des Außenrings 35a unmittelbar im Getriebegehäuse 20 alternativ auch an der Flanschplatte 38 festgelegt sein kann, die mit dem Getriebegehäuse 20 verbunden ist.

Auf der dem ersten Wälzlager 21 und dem Wellengenerator 27 gegenüberliegenden Seite des zweiten Wälzlagers 22 ragt ein Wellenabschnitt der Antriebswelle 18 aus dem Getriebegehäuse 20 heraus. Der Rotor 17 ist auf dem aus dem Getriebegehäuse 20 herausragenden Wellenabschnitt der Antriebswelle 18 befestigt.

In dem in Fig. 2 dargestellten Ausführungsbeispiel ist die Antriebswelle 18 einteilig ausgebildet und weist einen sich innerhalb des Getriebegehäuses 20 erstreckenden ersten Wellenabschnitt auf, der die wenigstens zwei Wälzlager 21, 22 trägt und einen sich innerhalb des Motorgehäuses 15 erstreckenden zweiten ungelagerten Wellenabschnitt aufweist, auf dem der Rotor 17 befestigt ist.

Im Unterscheid zur Ausführung der Fig. 2 ist in Fig. 3 ein alternatives Ausführungsbeispiel dargestellt, bei dem die Antriebswelle 18 zweiteilig ausgebildet ist und eine Getriebewelle 18a umfasst, welche die zwei Wälzlager 21, 22 trägt und eine ungelagerte Motorwelle 18b umfasst, auf welcher der Rotor 17 befestigt ist, wobei die Motorwelle 18b an die Getriebewelle 18a angeflanscht ist.

In beiden Ausführungsvarianten der Fig. 2 und Fig. 3 kann das Getriebegehäuse 20, insbesondere zusammen mit dem ersten Wälzlager 21 und dem zweiten Wälzlager 22 mittels mindestens einem Radialwellendichtring 39 öldicht und/oder fettdicht abgedichtet sein.

## Patentansprüche

1. Elektrischer Antrieb, aufweisend
einen elektrischen Motor (14), der ein Motorgehäuse (15), eine mittels wenigstens zweier Wälzlager (21, 22) drehbar gelagerte Antriebswelle (18), einen im Motorgehäuse (15) festgelegten Stator (16) und einen mit der Antriebswelle (18) verbundenen, im Motorgehäuse (15) drehbaren Rotor (17) umfasst, und
ein Spannungswellengetriebe (19), das ein Getriebegehäuse (20), einen starren Außenring (23) mit einer Innenverzahnung (24), eine flexible Abtriebsbüchse (25) mit einer Au-ßenverzahnung (26), und einen im Getriebegehäuse (20) drehbaren, an der flexiblen Abtriebsbüchse (25) abwälzenden Wellengenerator (27) umfasst, wobei die Außenverzahnung (26) der flexiblen Abtriebsbüchse (25) in Abhängigkeit einer Drehbewegung des Wellengenerators (27) mit der Innenverzahnung (24) des starren Außenrings (23) in kämmenden Eingriff ist,
wobei der Rotor (17) auf der Antriebswelle (18) befestigt ist und ein erstes der wenigstens zwei Wälzlager (21, 22) innerhalb der flexiblen Abtriebsbüchse (25) angeordnet und ausgebildet ist, die Antriebswelle (18) in dem Getriebegehäuse (20) drehbar zu lagern, **gekennzeichnet durch**
- eine Flanschplatte (38), an der auf der einen Seite der Flanschplatte (38) das Getriebegehäuse (20) angeflanscht ist, indem die Flanschplatte (38) mit dem starren Außenring (23) des Spannungswellengetriebes (19) verbunden ist, wobei
- an einer gegenüberliegenden Seite der Flanschplatte (38) das Motorgehäuse (15) angeflanscht ist, und
- der starre Außenring (23) in dem Getriebegehäuse (20) des Spannungswellengetriebes (19) gelagert ist.

2. Elektrischer Antrieb nach Anspruch 1, bei dem das innerhalb der flexiblen Abtriebsbüchse (25) angeordnete erste Wälzlager (21) einen mit der Antriebswelle (18) drehfest verbundenen, insbesondere einen auf der Antriebswelle (18) unmittelbar aufsitzenden Innenring (33) und einen mit der flexiblen Abtriebsbüchse (25) verbundenen Außenring (35) aufweist.

3. Elektrischer Antrieb nach Anspruch 1, bei dem das innerhalb der flexiblen Abtriebsbüchse (25) angeordnete erste Wälzlager (21) einen mit der Antriebswelle (18) drehfest verbundenen, insbesondere einen auf der Antriebswelle (18) unmittelbar aufsitzenden Innenring (33) und einen mit einem Abtriebsglied (36) verbundenen Außenring (35) aufweist.

4. Elektrischer Antrieb nach Anspruch 1, bei dem das innerhalb der flexiblen Abtriebsbüchse (25) angeordnete erste Wälzlager (21) einen mit der Antriebswelle (18) drehfest verbundenen, insbesondere einen auf der Antriebswelle (18) unmittelbar aufsitzenden Innenring (33) und einen mit einem separaten Außenringsitz (34), der an der flexiblen Abtriebsbüchse (25) oder dem Abtriebsglied (36) befestigt ist, verbundenen Außenring (35) aufweist.

5. Elektrischer Antrieb nach Anspruch 4, bei dem der separate Außenringsitz (34) von einem Topfeinsatz gebildet wird, der innenrandseitig eine Sitzfläche (37) für den Außenring (35) aufweist und bodenseitig mit der flexiblen Abtriebsbüchse (25), insbesondere einer Bodenfläche (29a) der flexiblen Abtriebsbüchse (25) und/oder mit dem Abtriebsglied (36) verbunden ist.

6. Elektrischer Antrieb nach einem der Ansprüche 2 bis 5, bei dem die Antriebswelle (18) mittels der wenigstens zwei Wälzlager (21, 22) in einer Fest-Loslageranordnung oder einer angestellten Lagerung drehbar gelagert ist,
insbesondere ausschließlich im Getriebegehäuse (20) drehbar gelagert ist.

7. Elektrischer Antrieb nach einem der Ansprüche 1 bis 6, bei dem ein zweites der wenigstens zwei Wälzlager (21, 22) auf einer dem ersten, innerhalb der flexiblen Abtriebsbüchse (25) angeordneten Wälzlager (21) gegenüberliegenden Seite des Wellengenerators (27) auf der axialen Erstreckung der Antriebswelle (18) angeordnet ist.

8. Elektrischer Antrieb nach einem der Ansprüche 1 bis 7, bei dem zumindest das erste Wälzlager (21) und zumindest das zweite Wälzlager (22), insbesondere alle zur drehbaren Lagerung der Antriebswelle (18) vorgesehenen Wälzlager (21, 22) innerhalb des Getriebegehäuses (20) angeordnet, insbesondere deren Außenringe (35, 35a) in dem Getriebegehäuse (20) festgelegt sind.

9. Elektrischer Antrieb nach einem der Ansprüche 1 bis 8, bei dem das Getriebegehäuse (20), insbesondere zusammen mit dem zumindest einem ersten Wälzlager (21) und dem zumindest einen zweiten Wälzlager (22), insbesondere zusammen mit allen zur drehbaren Lagerung der Antriebswelle (18) vorgesehenen Wälzlager (21, 22) mittels mindestens einem Radialwellendichtring (39) öldicht und/oder fettdicht abgedichtet ist.

10. Elektrischer Antrieb nach einem der Ansprüche 1 bis 9, bei dem auf einer dem ersten Wälzlager (21) und/oder dem Wellengenerator (27) gegenüberliegenden Seite des zweiten Wälzlagers (22) ein Wellenabschnitt der Antriebswelle (18) aus dem Getriebegehäuse (20) herausragt.

11. Elektrischer Antrieb nach Anspruch 10, bei dem der Rotor (17) auf dem aus dem Getriebegehäuse (20) herausragenden Wellenabschnitt der Antriebswelle (18) befestigt ist.

12. Elektrischer Antrieb nach einem der Ansprüche 1 bis 11, bei dem die Antriebswelle (18) einteilig ausgebildet ist und einen sich innerhalb des Getriebegehäuses (20) erstreckenden ersten Wellenabschnitt aufweist, der die wenigstens zwei Wälzlager (21, 22) trägt und einen sich innerhalb des Motorgehäuses (15) erstreckenden zweiten, insbesondere ungelagerten Wellenabschnitt aufweist, auf dem der Rotor (17) befestigt ist.

13. Elektrischer Antrieb nach einem der Ansprüche 1 bis 11, bei dem die Antriebswelle (18) zweiteilig oder mehrteilig ausgebildet ist und eine Getriebewelle (18a) umfasst, welche die wenigstens zwei Wälzlager (21, 22) trägt und eine Motorwelle (18b), insbesondere eine ungelagerte Motorwelle (18b) umfasst, auf welcher der Rotor (17) befestigt ist, wobei die Motorwelle (18b) an die Getriebewelle (18a) angeflanscht und/oder mittels einer Welle-Nabe-Verbindung angekoppelt ist.

14. Industrieroboter aufweisend eine Robotersteuerung (3), die ausgebildet und/oder eingerichtet ist, ein Roboterprogramm auszuführen, sowie aufweisend einen Manipulatorarm (2) mit mehreren Gliedern (5-12), die über Gelenke (4) verbunden sind, die gemäß des Roboterprogramms automatisiert oder in einem Handfahrbetrieb automatisch verstellbar sind, und aufweisend wenigstens einen von der Robotersteuerung (3) ansteuerbaren elektrischen Antrieb (13) nach einem der Ansprüche 1 bis 13, der ausgebildet ist, wenigstens eines der Gelenke (4) zu verstellen.

15. Industrieroboter nach Anspruch 14, bei dem das wenigstens eine Gelenk (4) ein erstes Glied der mehreren Gliedern (5-12) mit einem zweiten Glied der mehreren Glieder (5-12), drehbar verbindet und die flexible Antriebsbüchse (25) des elektrischen Antriebs (13) mit dem ersten, insbesondere abtriebsseitigen Glied starr verbunden ist und der Wellengenerator (27) des elektrischen Antriebs (13) mit dem zweiten, insbesondere antriebsseitigen Glied verbunden ist.

## Claims

1. Electric drive, comprising
an electric motor (14) having a motor housing (15), a drive shaft (18) rotatably mounted by means of at least two rolling bearings (21, 22), a stator (16) fixed in the motor housing (15) and a rotor (17) connected to the drive shaft (18) and rotatable in the motor housing (15), and
a strain wave gearing (19) comprising a gear housing (20), a rigid outer circle (23) with an internal toothing (24), a flexible output sleeve (25) with an external toothing (26), and a wave generator (27) rotatable mounted in the gear housing (20) and rolling on the flexible output sleeve (25), wherein the external toothing (26) of the flexible output sleeve (25) is in meshing engagement with the internal toothing (24) of the rigid outer ring (23) in dependence on a rotational movement of the shaft generator (27),
wherein the rotor (17) is mounted on the drive shaft (18) and a first of the at least two rolling bearings (21, 22) is disposed within the flexible output sleeve (25) and is adapted to rotatably support the drive shaft (18) in the gear housing (20), **characterized by**
- a flange plate (38) to which the gear housing (20) is flanged on one side of the flange plate (38), by connecting the flange plate (38) to the rigid outer ring (23) of the strain wave gearing (19), whereby
- the motor housing (15) is flanged to an opposite side of the flange plate (38), and
- the rigid outer circle (23) is mounted in the gear housing (20) of the strain wave gearing (19).

2. Electric drive according to claim 1, in which the first rolling bearing (21) arranged within the flexible output sleeve (25) has an inner ring (33), which is connected in a rotationally fixed manner to the drive shaft (18) and which in particular is seated directly on the drive shaft (18), and has an outer ring (35), which is connected to the flexible output sleeve (25).

3. Electric drive according to claim 1, in which the first rolling bearing (21) arranged within the flexible output sleeve (25) has an inner ring (33), which is connected in a rotationally fixed manner to the drive shaft (18) and which in particular is seated directly on the drive shaft (18), and has an outer ring (35), which is connected to an output member (36).

4. Electric drive according to claim 1, in which the first rolling bearing (21) arranged inside the flexible output sleeve (25) has an inner ring (33), which is connected in a rotationally fixed manner to the drive shaft (18), and which in particular is seated directly on the input shaft (18), and has an outer ring (35), which is connected to a separate outer ring seat (34) which is fastened to the flexible output sleeve (25) or to the output member (36).

5. Electric drive according to claim 4, in which the separate outer ring seat (34) is formed by a cup insert which has a seat surface (37) for the outer ring (35) on the inner edge side and is connected with its bottom side to the flexible output sleeve (25), in particular to a bottom surface (29a) of the flexible output sleeve (25) and/or to the output member (36).

6. Electric drive according to one of claims 2 to 5, in which the drive shaft (18) is rotatably mounted by means of the at least two rolling bearings (21, 22) in a locating and non-locating bearing arrangement or an adjusted bearing arrangement, in particular exclusively in the gear housing (20).

7. Electric drive according to one of claims 1 to 6, in which a second of the at least two rolling bearings (21, 22) is arranged on a side of the wave generator (27) opposite the first rolling bearing (21), which is arranged inside the flexible output sleeve (25) on the axial extension of the drive shaft (18).

8. Electric drive according to one of claims 1 to 7, in which at least the first rolling bearing (21) and at least the second rolling bearing (22), in particular all the rolling bearings (21, 22) provided for rotatably mounting the drive shaft (18), are arranged inside the gear housing (20), in particular their outer rings (35, 35a) are fixed in the gear housing (20).

9. Electric drive according to one of claims 1 to 8, in which the gear housing (20), in particular together with the at least one first rolling bearing (21) and the at least one second rolling bearing (22), in particular together with all the rolling bearings (21, 22) provided for the rotatable mounting of the drive shaft (18), is sealed in an oil-tight and/or grease-tight manner by means of at least one radial shaft seal ring (39).

10. Electric drive according to one of claims 1 to 9, in which a shaft section of the drive shaft (18) projects out of the gear housing (20) on a side of the second rolling bearing (22) opposite the first rolling bearing (21) and/or the shaft generator (27).

11. Electric drive according to claim 10, in which the rotor (17) is mounted on the shaft section of the drive shaft (18) projecting from the gear housing (20).

12. Electric drive according to one of claims 1 to 11, in which the drive shaft (18) is formed in one piece and has a first shaft section which extends inside the gear housing (20) and carries the at least two rolling bearings (21, 22) and has a second, in particular unsupported, shaft section which extends inside the motor housing (15) and on which the rotor (17) is mounted.

13. Electric drive according to one of claims 1 to 11, in which the drive shaft (18) is constructed in two or more parts and comprises a gear shaft (18a), which carries the at least two rolling bearings (21, 22), and comprises a motor shaft (18b), in particular an unsupported motor shaft (18b), on which the rotor (17) is mounted, the motor shaft (18b) being flange-mounted on the gear shaft (18a) and/or coupled by means of a shaft-hub connection.

14. Industrial Robot comprising a robot controller (3) which is designed and/or set up to execute a robot program, and having a manipulator arm (2) with a plurality of links (5-12) which are connected via joints (4) which can be adjusted automatically in accordance with the robot program or in a manual travel mode, and having at least one electric drive (13) according to one of claims 1 to 13 which can be actuated by the robot controller (3) and which is designed to adjust at least one of the joints (4).

15. Industrial Robot according to claim 14, wherein said at least one joint (4) rotatably connects a first member of said plurality of members (5-12) to a second member of said plurality of members (5-12), and said flexible output sleeve (25) of said electric drive (13) is rigidly connected to said first member, in particular on the output side, and said wave generator (27) of said electric drive (13) is connected to said second member, in particular on the input side.

## Revendications

1. Entraînement électrique, présentant
un moteur électrique (14), qui comprend un carter de moteur (15), un arbre d'entraînement (18) monté rotatif au moyen d'au moins deux paliers à roulement (21, 22), un stator (16) fixé dans le carter de moteur (15) et un rotor (17) relié à l'arbre d'entraînement (18) et pouvant tourner dans le carter de moteur (15), et
un engrenage à ondes de déformation (19) qui comprend un carter d'engrenage (20), une bague extérieure (23) rigide avec une denture intérieure (24), un manchon de sortie (25) flexible avec une denture extérieure (26), et un générateur d'ondes (27) qui peut tourner dans le carter d'engrenage (20) et roule sur le manchon de sortie (25) flexible, dans lequel la denture extérieure (26) du manchon de sortie (25) flexible est en prise par engrènement avec la denture intérieure (24) de la bague externe (23) rigide en fonction d'un mouvement rotatif du générateur d'ondes (27),
dans lequel le rotor (17) est fixé sur l'arbre d'entraînement (18), et un premier desdits au moins deux paliers à roulement (21, 22) est agencé à l'intérieur du manchon de sortie (25) flexible et réalisé pour monter de manière rotative l'arbre d'entraînement (18) dans le carter d'engrenage (20), **caractérisé par**
- une plaque de bride (38) sur laquelle, sur un côté de la plaque de bride (38), le carter d'engrenage (20) est bridé par le fait que la plaque de bride (38) est reliée à la bague extérieure (23) rigide de l'engrenage à ondes de déformation (19),
- le carter de moteur (15) étant bridé sur un côté opposé de la plaque de bride (38), et
- la bague extérieure (23) rigide étant montée dans le carter d'engrenage (20) de l'engrenage à ondes de déformation (19).

2. Entraînement électrique selon la revendication 1, dans lequel le premier palier à roulement (21) agencé à l'intérieur du manchon de sortie (25) flexible présente une bague intérieure (33) reliée de manière fixe en rotation à l'arbre d'entraînement (18), laquelle repose en particulier directement sur l'arbre d'entraînement (18) et une bague extérieure (35) reliée au manchon de sortie (25) flexible.

3. Entraînement électrique selon la revendication 1, dans lequel le premier palier à roulement (21) agencé à l'intérieur du manchon de sortie (25) flexible présente une bague intérieure (33) reliée de manière fixe en rotation à l'arbre d'entraînement (18), laquelle repose en particulier directement sur l'arbre d'entraînement (18) et une bague extérieure (35) reliée à un élément de sortie (36).

4. Entraînement électrique selon la revendication 1, dans lequel le premier palier à roulement (21) agencé à l'intérieur du manchon de sortie (25) flexible présente une bague intérieure (33) reliée de manière fixe en rotation à l'arbre d'entraînement (18), laquelle repose en particulier directement sur l'arbre d'entraînement (18), et une bague extérieure (35) reliée à un siège de bague extérieure (34) séparé qui est fixé au manchon de sortie (25) flexible ou à l'élément de sortie (36).

5. Entraînement électrique selon la revendication 4, dans lequel le siège de bague extérieure (34) séparé est formé par un insert en forme de cuvette qui présente, du côté du bord intérieur, une surface de siège (37) pour la bague extérieure (35) et qui est relié, du côté du fond, au manchon de sortie (25) flexible, en particulier à une surface de fond (29a) du manchon de sortie (25) flexible, et/ou à l'élément de sortie (36).

6. Entraînement électrique selon l'une des revendications 2 à 5, dans lequel l'arbre d'entraînement (18) est monté en rotation au moyen desdits au moins deux roulements (21, 22) dans une disposition de palier fixe/mobile ou dans un montage serré, en particulier est monté en rotation exclusivement dans le carter d'engrenage (20).

7. Entraînement électrique selon l'une quelconque des revendications 1 à 6, dans lequel un deuxième desdits au moins deux paliers à roulement (21, 22) est agencé sur un côté du générateur d'ondes (27) qui est opposé au premier palier à roulement (21) agencé à l'intérieur du manchon de sortie (25) flexible, sur l'extension axiale de l'arbre d'entraînement (18).

8. Entraînement électrique selon l'une quelconque des revendications 1 à 7, dans lequel au moins le premier palier à roulement (21) et au moins le deuxième palier à roulement (22), en particulier tous les paliers à roulement (21, 22) prévus pour le montage en rotation de l'arbre d'entraînement (18), sont agencés à l'intérieur du carter d'engrenage (20), en particulier leurs bagues extérieures (35, 35a) sont fixées dans le carter d'engrenage (20).

9. Entraînement électrique selon l'une des revendications 1 à 8, dans lequel le carter d'engrenage (20), en particulier conjointement avec ledit au moins premier palier à roulement (21) et ledit au moins deuxième palier à roulement (22), en particulier conjointement avec tous les paliers à roulement (21, 22) prévus pour le montage en rotation de l'arbre d'entraînement (18), est rendu étanche à l'huile et/ou à la graisse au moyen d'au moins une bague d'étanchéité d'arbre radial (39).

10. Entraînement électrique selon l'une quelconque des revendications 1 à 9, dans lequel sur un côté du deuxième palier à roulement (22) qui est opposé au premier palier à roulement (21) et/ou au générateur d'ondes (27), un tronçon d'arbre de l'arbre d'entraînement (18) fait saillie hors du carter d'engrenage (20).

11. Entraînement électrique selon la revendication 10, dans lequel le rotor (17) est fixé sur le tronçon d'arbre de l'arbre d'entraînement (18) qui fait saillie hors du carter d'engrenage (20).

12. Entraînement électrique selon l'une quelconque des revendications 1 à 11, dans lequel l'arbre d'entraînement (18) est formé d'une seule pièce et présente un premier tronçon d'arbre s'étendant à l'intérieur du carter d'engrenage (20) qui porte lesdits au moins deux paliers à roulement (21, 22) et présente un deuxième tronçon d'arbre, en particulier non soutenu, s'étendant à l'intérieur du carter de moteur (15) et sur lequel est fixé le rotor (17).

13. Entraînement électrique selon l'une quelconque des revendications 1 à 11, dans lequel l'arbre d'entraînement (18) est réalisé en deux ou plusieurs parties et comprend un arbre d'engrenage (18a) qui porte lesdits au moins deux paliers à roulement (21, 22) et un arbre de moteur (18b), en particulier un arbre de moteur (18b) non soutenu, sur lequel est fixé le rotor (17), l'arbre de moteur (18b) étant bridé sur l'arbre d'engrenage (18a) et/ou couplé à celui-ci au moyen d'une liaison arbre-moyeu.

14. Robot industriel comprenant une commande de robot (3), qui est réaisée et/ou aménagée pour mettre à exécution un programme de robot, et comprenant en outre un bras manipulateur (2) avec une pluralité de membres (5-12) qui sont reliés par des articulations (4) qui sont automatisées selon le programme de robot ou qui sont automatiquement réglables dans un mode de fonctionnement manuel, et comprenant au moins un entraînement électrique (13) qui peut être piloté par la commande de robot (3), selon l'une des revendications 1 à 13, qui est réalisé pour régler au moins l'une des articulations (4).

15. Robot industriel selon la revendication 14, dans lequel ladite au moins une articulation (4) relie de manière rotative un premier membre de la pluralité de membres (5-12) à un second membre de la pluralité de membres (5-12), et le manchon d'entraînement flexible (25) de l'entraînement électrique (13) est reliée de manière rigide au premier membre, en particulier côté sortie, et le générateur d'ondes (27) de l'entraînement électrique (13) est relié au deuxième membre, en particulier côté entraînement.
